# EUROPÄISCHE PATENTANMELDUNG

(11) **EP 1 816 591 A1**
(43) Veröffentlichungstag der Anmeldung: **08.08.2007**
(21) Anmeldenummer: 06002256.3
(22) Anmeldetag: 03.02.2006
(51) Int. Cl.: G06K 19/077, H01Q 7/00, H01Q 1/38

(54) **Antennenanordnung**

(71) Anmelder: Delphi Technologies, Inc., Troy, MI 48007 (US)
(72) Erfinder: Suck, Jochen, 51674 Wiehl (DE); Ioffe, Alexander, Dr., 53229 Bonn (DE)
(74) Vertreter: Manitz, Gerhart

(57) **Zusammenfassung**

Die Erfindung betrifft eine Antennenanordnung mit einer Vielzahl von Trägerplatten, bei der wenigstens zwei der Trägerplatten zumindest auf einer ihrer Oberflächen und/oder wenigstens eine Trägerplatte auf ihren beiden Oberflächen Antennenstrukturen tragen, die in Reihe geschaltet sind, und die für die Antennenfunktion wesentlichen Teile benachbarter Antennenstrukturen nicht passgenau übereinander liegen.

## Beschreibung

Die Erfindung betrifft eine Antennenanordnung mit einer Vielzahl von Trägerplatten, bei der wenigstens zwei der Trägerplatten zumindest auf einer ihrer Oberflächen Antennenstrukturen tragen.

Zum Beispiel für ein schlüsselfreies Eintrittssystem benötigt man zumindest einen Niederfrequenzsender und einen Niederfrequenzempfänger. Im automobilen Bereich werden damit zum Beispiel berührungslose Identifikationssysteme realisiert, bei denen der Sender Teil des Fahrzeuges ist und der Empfänger Teil des Schlüssels. Der Schlüssel eines solchen Systems muss in allen Richtungen empfangen und/oder senden können, damit gewährleistet ist, dass der Benutzer immer sein Fahrzeug entriegeln kann und gegebenenfalls durch eine zusätzliche Betätigung auch den Motor starten kann. Um das garantieren zu können, benötigt man einen in drei Dimensionen wirkenden Übertragungsbaustein im Schlüssel, das heißt insbesondere Niederfrequenzantennen, die in allen drei Raumrichtungen empfangen und/oder senden können. Bei bekannten Lösungen werden dazu in zwei der drei Richtungen Ferritspulen eingesetzt. Die dritte Komponente, die in der Regel senkrecht zu einer Leiterplatte im Schlüssel ausgerichtet ist, wird mit einer externen Luftspule oder ebenfalls mit einer Ferritspule realisiert. Insbesondere externe Luftspulen sind empfindlich im Betrieb und aufwändig in der Herstellung.

Aus DE 20 2004 002 448 U1 ist eine mehrlagige Rahmenantenne mit mehreren Lagen von übereinander liegend angeordneten, ringförmigen Antennenstrukturen bekannt, die parallel geschaltet sind. Die Ringstrukturen sind passgenau übereinander angeordnet.

Aus EP 0 547 563 B1 und DD 290 738 A5 sind mehrlagige spiralförmige Antennenanordnungen bekannt, bei denen die Strukturen in Serie geschaltet sind und passgenau übereinander liegen.

Es ist die Aufgabe der vorliegenden Erfindung, eine kompakte und unempfindliche Antenne anzugeben, bei der insbesondere die wechselseitige Beeinflussung der einzelnen Antennenstrukturen gering ist.

Diese Aufgabe wird mit einer Antennenanordnung mit den Merkmalen des Anspruches 1 gelöst. Eine besonders vorteilhafte Verwendung ist Gegenstand des Anspruches 15. Unteransprüche sind auf vorteilhafte Ausgestaltungen gerichtet.

Die erfindungsgemäße Antennenanordnung weist eine Vielzahl von Trägerplatten auf. Wenigstens zwei dieser Trägerplatten tragen auf jeweils wenigstens einer ihrer Oberflächen und/oder wenigstens eine Trägerplatte trägt auf ihren beiden Oberflächen Antennenstrukturen, wobei die Antennenstrukturen unterschiedlicher Lagen in Reihe geschaltet sind. Die für die Antennenfunktion wesentlichen Teile von in einer Richtung senkrecht zu den Trägerplatten benachbarten Antennenstrukturen liegen nicht passgenau übereinander. Erfindungsgemäß sind wenigstens zwei, bevorzugt wenigstens drei derart benachbarte Antennenstrukturen vorgesehen.

Benachbarte Antennenstrukturen können sich zum Beispiel auf den gegenüberliegenden Oberflächen einer Trägerplatte oder auf zwei benachbarten Trägerplatten befinden. Der Begriff "Trägerplatte" wird hier allgemein für Trägerschichten verwendet, zum Beispiel auch für flexible Trägerstrukturen.

Die für die Antennenfunktion wesentlichen Teile der Antennenstrukturen umfassen zum Beispiel bei einer spiralförmigen Antenne die metallischen Spiralen bzw. bei einer ringförmigen Antenne die ringförmigen Metallleiter. Die Bezeichnung "spiralförmig" wird hier allgemein, insbesondere auch für eckige Spiralanordnungen, verwendet.

Die Antennenstrukturen der einzelnen Lagen unterscheiden sich also nicht nur zum Beispiel durch ihre Anschlussgeometrie oder die Lage ihrer Zuleitungen, sondern auch durch die Anordnung auf der jeweiligen Trägerplatte der für die Antennenfunktion wesentlichen Teile. Auf diese Weise ist sichergestellt, dass der größte Teil der metallischen Leiter der Antennenstrukturen auf den einzelnen Trägerplatten nicht direkt übereinander liegen. Dies bewirkt, dass die kapazitive Kopplung zwischen den Antennenstrukturen benachbarter Lagen und damit die Beeinflussung der Antennenfunktion benachbarter Antennenstrukturen gegenüber einer passgenauen Übereinanderanordnung signifikant verringert sind.

Die einzelnen Antennenstrukturen können über metallische Verbindungen an der Außenseite der Trägerplatten in Serie verbunden sein. Besonders einfach und sicher ist die Verbindung benachbarter Antennenstrukturen mit Hilfe von Durchkontaktierungen durch die Trägerplatten.

Die nicht passgenaue Übereinanderanordnung benachbarter Antennenstrukturen kann zum Beispiel durch eine unterschiedliche Form der einzelnen Antennenstrukturen realisiert werden. Bei einer bevorzugten Weiterbildung haben benachbarte Antennenstrukturen im Wesentlichen die gleiche Form, sind aber gegeneinander versetzt. Dies gewährleistet eine möglichst geringe kapazitive Kopplung, da die Leiter benachbarter Antennenstrukturen sich nicht gegenüber liegen. Auf diese Weise ist die kapazitive Kopplung der Antennenstrukturen untereinander sehr gering, obwohl die Trägerplatten dünn gehalten werden können.

Insbesondere zum Beispiel bei einer Spiralantenne können bei einer Weiterbildung der Erfindung die spiralförmigen Antennenstrukturen zweier benachbarter Antennenstrukturen derart gegeneinander versetzt sein, dass die Projektionen der Windungen der ersten spiralförmigen Antennenstruktur auf die zweite Antennenstruktur in einer Richtung senkrecht zu den Trägerplatten sich mit den Windungen der zweiten spiralförmigen Antennenstruktur abwechseln.

Bei einer Antennenanordnung mit spiralförmigen Antennenstrukturen kann aus Kostengründen die jeweilige Mitte frei bleiben, da sie zur Effektivität der Antennenfunktion nur wenig beiträgt.

Ein zusätzlicher Unterschied benachbarter Antennenstrukturen kann erreicht werden, wenn ihre Windungszahl unterschiedlich ist.

Bei einer einfachen Realisierung sind zumindest diejenigen Trägerplatten, die Antennenstrukturen tragen, als Leiterplatten ausgebildet, auf die die Antennenstrukturen als Leiterbahnen aufgebracht sind. Insbesondere eignen sich flexible Leiterplatten (flexible printed circuits, FPCs). Solche auf Leiterplatten aufgebrachte Antennenstrukturen sind mit herkömmlichen Techniken einfach herzustellen und kostengünstig.

Eine besondere Ausgestaltung der erfindungsgemäßen Antennenanordnung weist Leiterbahnen einer Breite von nicht mehr als 150 µm, bevorzugt nicht mehr als 100 µm auf. Die schmalen Leiterbahnen ermöglichen eine höhere Windungsanzahl, ohne viel Platz zu beanspruchen. Die hohe Windungszahl ermöglicht andererseits eine größere Induktivität.

Wird die Leiterbahnhöhe im Bereich zwischen 35 bis 75 µm gewählt, haben die Leiterbahnen eine drahtähnliche Form, die der Induktivität einer herkömmlichen freien Spule ähnlich ist.

Insbesondere bei Verwendung derartig klein dimensionierter Leiterbahnen ist es vorteilhaft, wenn die außen liegende Oberfläche einer äußeren Trägerplatte, vorzugsweise die außen liegenden Oberflächen beider äußerer Trägerplatten, keine Antennenstrukturen aufweisen, so dass die äußeren Trägerplatten eine vorteilhafte Schutzfunktion bieten. Außerdem können auf den beiden äußeren Trägerplatten dann auf einfache Weise zusätzliche Schaltelemente vorgesehen werden.

Bei einer Weiterbildung der Erfindung sind die Antennenstrukturen einzeln oder in Gruppen zuschaltbar ausgestaltet. Daraus ergibt sich eine "Kaskadierbarkeit", wodurch sich eine zumindest in Stufen regelbare Spulenanordnung realisieren lässt. Durch Zuschalten einzelner Antennenstrukturen lassen sich zum Beispiel bei N Lagen mit einer Induktivität von L µH Induktivitäten von 1 x L bis N x L einstellen.

Bei einer Weiterbildung ist auf wenigstens einer der Trägerplatten, vorzugsweise einer der außen liegenden Trägerplatten, eine integrierte Schaltung zum Beispiel zur Anpassung vorgesehen. Insbesondere bei einer Anordnung, bei der die äußeren Trägerplatten keine Antennenstruktur tragen, ist auf diese Weise platzökonomisch eine Anpassschaltung unterbringbar.

Ist bei der erfindungsgemäßen Antennenanordnung zusätzlich ein Zuschalten oder Variieren eines seriellen, gegebenenfalls regelbaren Widerstandes möglich, lassen sich produktionsabhängige Widerstandsschwankungen einfach kompensieren. Das ist insbesondere bei sehr dünnen Antennenstrukturen mit Breiten von einigen bis einigen 100 µm günstig, damit die Präzision eingehalten werden kann. Der Widerstand kann zum Beispiel auf einer der Trägerplatten vorgesehen sein, vorzugsweise auf einer der beiden äußeren, auf deren Außenfläche keine Antennenstruktur angeordnet ist.

Die erfindungsgemäße Antennenanordnung ist vorteilhafterweise zur Verwendung von Frequenzen von wenigstens 10 kHz und/oder höchstens 150 kHz ausgelegt.

Besonders geeignet ist die erfindungsgemäße Antennenanordnung zur Übertragung von Daten oder Steuerbefehlen zum Beispiel zur berührungslosen Identifikation. Über die erfindungsgemäße Antennenanordnung kann auch drahtlos Energie übertragen werden, damit Bauelemente, die mit der Antenne verbunden sind, betrieben werden können.

Die erfindungsgemäße Antennenanordnung kann zum Beispiel bei schlüssellosen Eintrittssystemen für Kraftfahrzeuge eingesetzt werden. Signale können auf diese Weise zwischen dem Schlüssel und dem Fahrzeug ausgetauscht werden, um eine Identifikation zu ermöglichen. Andere Anwendungen sehen vor, dass durch Senden eines entsprechenden Signals des Schlüssels über die Antennenanordnung an das Fahrzeug gewünschte Funktionen ausgelöst werden, zum Beispiel der Kofferraum geöffnet wird oder ähnliches.

Die Erfindung wird anhand von Ausführungsformen im Detail erläutert, die schematisch in den anliegenden Figuren dargestellt sind. Dabei zeigt
- Fig. 1: die schematische Darstellung einer Ausführungsform einer erfindungsgemäßen Antennenanordnung,
- Fig. 2: einen seitlichen Schnitt durch eine andere Ausführungsform einer erfindungsgemäßen Antennenanordnung, und
- Fig. 3: eine Draufsicht auf eine Trägerplatte einer weiteren Ausführungsform einer erfindungsgemäßen Antennenanordnung.

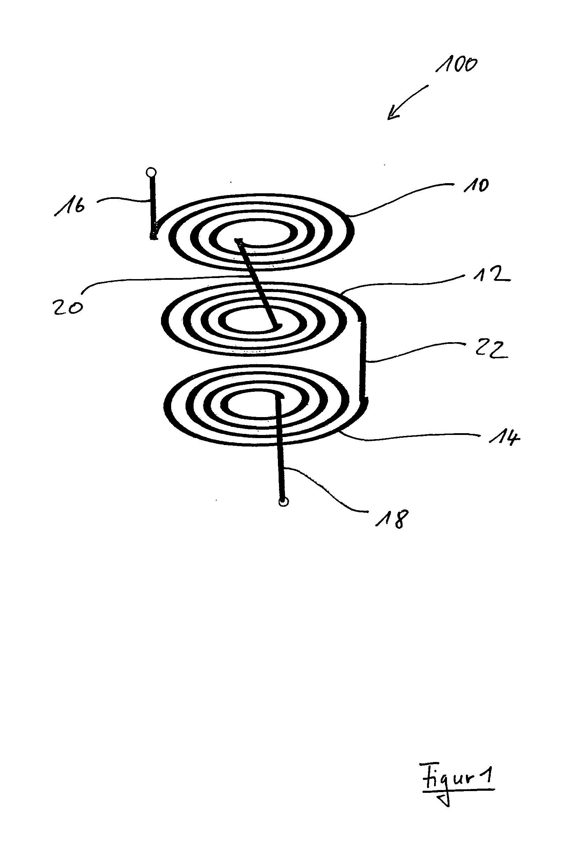

Fig. 1 zeigt eine Antennenanordnung 100 in schematischer Darstellung, die drei spiralförmige, metallische Antennenstrukturen 10, 12, 14 umfasst, die auf in Fig. 1 nicht dargestellten Leiterplatten aufgebracht sind. Durch die Leiterplatten gehen metallische Durchkontaktierungen 20 und 22, um die Antennenstrukturen miteinander elektrisch zu verbinden. Die drei Antennenstrukturen 10, 12, 14 haben gleichen Wickelsinn und sind in Serie geschaltet. Über Zuleitungen 16, 18 wird die so gebildete Antenne gespeist bzw. das Signal ausgelesen. Die Antennenstrukturen sind als Kupferleiterbahnen auf den Leiterplatten realisiert und haben eine Breite von nicht mehr als 150 µm. Ihre Höhe beträgt zwischen 35 und 75 µm.

Zum Beispiel an den Verbindungen zwischen den einzelnen Antennenstrukturen 10, 12, 14 können Vorrichtungen vorgesehen sein, mit denen einzelne Antennenstrukturen überbrückt bzw. zugeschaltet werden können. Auf diese Weise lassen sich Antennen mit unterschiedlichen Induktivitäten realisieren, je nachdem wie viele der Antennenstrukturen an der Antennenfunktion teilnehmen.

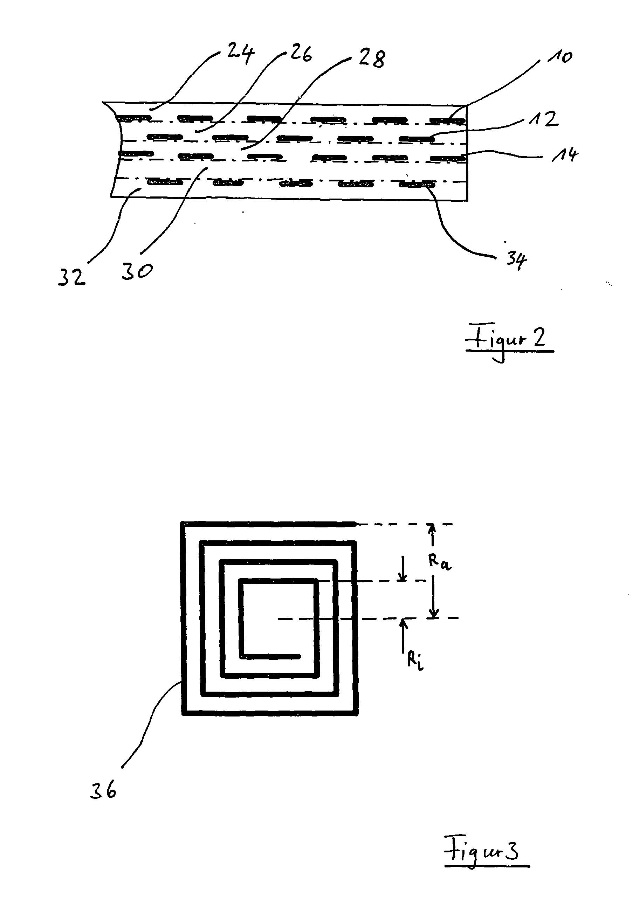

Fig. 2 zeigt den seitlichen Querschnitt durch eine erfindungsgemäße Antennenanordnung mit vier Antennenstrukturen 10, 12, 14, 34. Auch diese Antennenstrukturen haben eine Breite von nicht mehr als 150 µm und eine Höhe zwischen 35 und 75 µm. Die relativen Maße, insbesondere die Dicken der die Antennestrukturen bildenden Leiterbahnen 10, 12, 14, 34 und der die Trägerplatten bildenden Leiterplatten 24, 26, 28, 30, 32 sind in Fig. 2 nicht maßstabsgetreu dargestellt.

Die Antennenstrukturen mit den Bezugsziffern 14 und 34 befinden sich auf gegenüberliegenden Oberflächen der Leiterplatte 30. Die Antennenstruktur mit der Bezugsziffer 12 befindet sich auf einer der Leiterplatte mit der Bezugsziffer 30 abgewandten Oberfläche der Leiterplatte mit der Bezugsziffer 28. Schließlich befindet sich die Antennenstruktur mit der Bezugsziffer 10 auf derjenigen Oberfläche der Leiterplatte mit der Bezugsziffer 26, die der Leiterplatte mit der Bezugsziffer 28 abgewandt ist. Die Leiterplatten mit den Bezugsziffern 24 und 32, die den jeweiligen äußeren Abschluss bilden, tragen keine Antennenstruktur.

Deutlich ist in Fig. 2 zu erkennen, dass die Antennenstrukturen benachbarter Lagen gegeneinander versetzt sind. Auf diese Weise ist die kapazitive Kopplung zwischen den Antennenstrukturen benachbarter Lagen gering, obwohl auch die Dicke der Leiterplatten gering gehalten werden kann.

Die äußeren Leiterplatten 24, 32 dienen zum Schutz der empfindlichen dünnen Antennenstrukturen und können außerdem zum Tragen von zusätzlichen Schaltelementen zum Beispiel zur Anpassung dienen.

Besonders einfach aufzubringen und handzuhaben sind Antennenstrukturen, die eckig ausgebildet sind, wie es die Draufsicht auf eine Antennenstruktur in Fig. 3 zeigt. Dabei ist es besonders vorteilhaft, wenn die innere Dimension Rᵢ bei der gezeigten Anordnung etwa zweimal der äußeren Dimension Rₐ dividiert durch 5 entspricht.

Bei den gezeigten Ausführungsformen handelt es sich um Antennenanordnungen mit drei bzw. vier Lagen. Es sind auch Antennenanordnungen mit mehr oder weniger Lagen realisierbar, je nachdem welche Induktivitäten gewünscht sind.

In den Figuren nicht dargestellt ist ein zusätzlicher regelbarer Widerstand, der mit der Antennenanordnung verbunden ist, um produktionsabhängige Widerstandstoleranzen zu kompensieren, die gerade bei derartig kleinen Leiterbahnen störend auftreten können. Er kann zum Beispiel auf einer der äußeren Leiterplatten aufgebracht sein.

Mit der erfindungsgemäßen Antennenanordnung können zum Beispiel Daten oder Steuersignale ausgetauscht werden. Außerdem eignet sich die Antennenanordnung zum drahtlosen Einspeisen von Energie zum Betrieb von Bauelementen, die mit der Antenne verbunden sind.

Insbesondere eignet sich die erfindungsgemäße Antennenanordnung als Ersatz für eine Luftspule, die in Verbindung mit zwei weiteren Spulen, zum Beispiel Ferritspulen, ein dreidimensional empfangendes bzw. sendendes Antennensystem zur Verfügung stellt.

### Bezugszeichenliste

- 10, 12, 14: Antennenstrukturen, Leiterbahnen
- 16, 18: Zuleitungen
- 20, 22: Durchkontaktierungen
- 24: äußere Trägerschicht, Leiterplatte
- 26, 28, 30: Trägerschichten, Leiterplatten
- 32: äußere Trägerschicht, Leiterplatte
- 34, 36: Antennenstrukturen, Leiterbahnen
- 100: Antenne

## Patentansprüche

1. Antennenanordnung mit einer Vielzahl von Trägerplatten (24, 26, 28, 30, 32), bei der
- wenigstens zwei (26, 28, 30) der Trägerplatten zumindest auf einer ihrer Oberflächen und/oder wenigstens eine Trägerplatte (30) auf ihren beiden Oberflächen Antennenstrukturen (10, 12, 14, 34) tragen,
- die Antennenstrukturen in Reihe geschaltet sind und
- die für die Antennenfunktion wesentlichen Teile von in einer Richtung senkrecht zu den Trägerplatten benachbarten Antennenstrukturen nicht passgenau übereinander liegen.

2. Antennenanordnung nach Anspruch 1, bei der benachbarte Antennenstrukturen im Wesentlichen gleiche Form haben, aber gegeneinander versetzt sind.

3. Antennenanordnung nach einem der Ansprüche 1 oder 2, bei der die Antennenstrukturen (10, 12, 14, 34, 36) spiralförmig auf den Trägerplatten angeordnet sind.

4. Antennenanordnung nach Anspruch 3, bei der zwei benachbarte Antennenstrukturen derart gegeneinander versetzt sind, dass die Projektionen der Windungen der ersten Antennenstruktur auf die zweite Antennenstruktur in einer Richtung senkrecht zu den Trägerplatten sich mit den Windungen der zweiten Antennenstruktur abwechseln.

5. Antennenanordnung nach einem der Ansprüche 3 oder 4, bei der der Wickelsinn der spiralförmigen Antennenstrukturen (10, 12, 14) gleich ist.

6. Antennenanordnung nach einem der Ansprüche 3 bis 5, bei der benachbarte Antennenstrukturen (10, 12, 14, 34) unterschiedliche Windungszahl haben.

7. Antennenanordnung nach einem der Ansprüche 1 bis 6, bei der zumindest diejenigen Trägerplatten, die Antennenstrukturen tragen, Leiterplatten umfassen und die Antennenstrukturen durch Leiterbahnen (10, 12, 14, 34, 36) auf den Leiterplatten gebildet werden.

8. Antennenanordnung nach Anspruch 7, bei der die Leiterbahnbreite maximal 150 µm, vorzugsweise maximal 100 µm, beträgt.

9. Antennenanordnung nach einem der Ansprüche 7 oder 8, bei der die Leiterbahnhöhe wenigstens 35 µm und/oder höchstens 75 µm beträgt.

10. Antennenanordnung nach einem der Ansprüche 1 bis 9, bei der auf den außen liegenden Oberflächen der beiden äußeren Trägerplatten (24, 32) keine Antennenstrukturen vorgesehen sind.

11. Antennenanordnung nach einem der Ansprüche 1 bis 10, bei der zumindest einzelne der Antennenstrukturen zuschaltbar ausgestaltet sind.

12. Antennenanordnung nach einem der Ansprüche 1 bis 11, bei der auf wenigstens einer der Trägerplatten, vorzugsweise wenigstens einer der äußeren Trägerplatten, eine integrierte Schaltung vorgesehen ist.

13. Antennenanordnung nach einem der Ansprüche 1 bis 12, mit wenigstens einem, vorzugsweise regelbaren, Widerstand, der bevorzugt auf einer der Trägerplatten, besonders bevorzugt auf einer der äußeren Trägerplatten, angeordnet ist.

14. Antennenanordnung nach einem der Ansprüche 1 bis 13, die zur Verwendung mit Frequenzen von wenigstens 10 kHz und/oder höchstens 150 kHz ausgelegt ist.

15. Verwendung einer Antennenanordnung gemäß einem der Ansprüche 1 bis 14 zur Datenübertragung, Steuerbefehlübertragung und/oder Energieeinspeisung.

16. Verwendung einer Antennenanordnung gemäß Anspruch 15 im automobilen Bereich, insbesondere in einem berührungslosen Identifikationssystem.

## Geänderte Patentansprüche

### Geänderte Patentansprüche gemäss Regel 86(2) EPÜ.

**1.** Antennenanordnung mit einer Vielzahl von Trägerplatten (24, 26, 28, 30, 32), bei der
- wenigstens zwei (26, 28, 30) der Trägerplatten zumindest auf einer ihrer Oberflächen und/oder wenigstens eine Trägerplatte (30) auf ihren beiden Oberflächen metallische Leiter als Antennenstrukturen (10, 12, 14, 34) tragen,
- die Antennenstrukturen in Reihe geschaltet sind, und
- die für die Antennenfunktion verantwortlichen Teile von in einer Richtung senkrecht zu den Trägerplatten benachbarten Antennenstrukturen nicht passgenau übereinander liegen, **gekennzeichnet durch**
wenigstens eine Vorrichtung zur Überbrückung bzw. Zuschaltung einzelner Antennenstrukturen.

**2.** Antennenanordnung nach Anspruch 1, bei der benachbarte Antennenstrukturen im Wesentlichen gleiche Form haben, aber gegeneinander versetzt sind.

**3.** Antennenanordnung nach einem der Ansprüche 1 oder 2, bei der die Antennenstrukturen (10, 12, 14, 34, 36) spiralförmig auf den Trägerplatten angeordnet sind.

**4.** Antennenanordnung nach Anspruch 3, bei der zwei benachbarte Antennenstrukturen derart gegeneinander versetzt sind, dass die Projektionen der Windungen der ersten Antennenstruktur auf die zweite Antennenstruktur in einer Richtung senkrecht zu den Trägerplatten sich mit den Windungen der zweiten Antennenstruktur abwechseln.

**5.** Antennenanordnung nach einem der Ansprüche 3 oder 4, bei der der Wickelsinn der spiralförmigen Antennenstrukturen (10, 12, 14) gleich ist.

**6.** Antennenanordnung nach einem der Ansprüche 3 bis 5, bei der benachbarte Antennenstrukturen (10, 12, 14, 34) unterschiedliche Windungszahl haben.

**7.** Antennenanordnung nach einem der Ansprüche 1 bis 6, bei der zumindest diejenigen Trägerplatten, die Antennenstrukturen tragen, Leiterplatten umfassen und die Antennenstrukturen durch Leiterbahnen (10, 12, 14, 34, 36) auf den Leiterplatten gebildet werden.

**8.** Antennenanordnung nach Anspruch 7, bei der die Leiterbahnbreite maximal 150 µm, vorzugsweise maximal 100 µm, beträgt.

**9.** Antennenanordnung nach einem der Ansprüche 7 oder 8, bei der die Leiterbahnhöhe wenigstens 35 µm und/oder höchstens 75 µm beträgt.

**10.** Antennenanordnung nach einem der Ansprüche 1 bis 9, bei der auf den außen liegenden Oberflächen der beiden äußeren Trägerplatten (24, 32) keine Antennenstrukturen vorgesehen sind.

**11.** Antennenanordnung nach einem der Ansprüche 1 bis 10, bei der auf wenigstens einer der Trägerplatten, vorzugsweise wenigstens einer der äußeren Trägerplatten, eine integrierte Schaltung vorgesehen ist.

**12.** Antennenanordnung nach einem der Ansprüche 1 bis 11, mit wenigstens einem, vorzugsweise regelbaren, Widerstand, der bevorzugt auf einer der Trägerplatten, besonders bevorzugt auf einer der äußeren Trägerplatten, angeordnet ist.

**13.** Antennenanordnung nach einem der Ansprüche 1 bis 12, die zur Verwendung mit Frequenzen von wenigstens 10 kHz und/oder höchstens 150 kHz ausgelegt ist.

**14.** Verwendung einer Antennenanordnung gemäß einem der Ansprüche 1 bis 13 zur Datenübertragung, Steuerbefehlübertragung und/oder Energieeinspeisung.

**15.** Verwendung einer Antennenanordnung gemäß Anspruch 14 im automobilen Bereich, insbesondere in einem berührungslosen Identifikationssystem.
